# EUROPÄISCHE PATENTSCHRIFT

(11) **EP 0 483 878 B1**
(45) Veröffentlichungstag und Bekanntmachung des Hinweises auf die Patenterteilung: **19.03.1997**
(21) Anmeldenummer: 91118670.8
(22) Anmeldetag: 31.10.1991
(51) Int. Cl.: F23B 5/04, F23L 9/00, F23L 3/00, F23L 15/00, F23B 1/16

(54) **Brennvorrichtung für Holz und Kohle**
Combustion device for wood and coal
Dispositif de combustion pour bois et charbon

(30) Priorität: 31.10.1990 DE 4034672
(43) Veröffentlichungstag der Anmeldung: 06.05.1992
(73) Patentinhaber: Posch, Heribert, 83627 Wall/Warngau (DE)
(72) Erfinder: Posch, Heribert, 83627 Wall/Warngau (DE)
(74) Vertreter: Alber, Norbert

(56) Entgegenhaltungen:
- EP-A- 0 254 321
- DE-C- 3 833 090
- FR-A- 768 790

## Beschreibung

Die Erfindung betrifft eine Brennvorrichtung zum Verbrennen von Holz oder Kohle, bestehend aus einer Frontwand mit einer Brennstoff-Einfüllöffnung, aus zwei Seitenwänden, aus einer Rückwand, aus einer Bodenwand und aus einer Deckenwand, aus einer Tür für die Brennstoff-Einfüllöffnung, aus einem Steuerelement zur Steuerung des wirksamen Querschnitts einer Frischluft-Einlauföffnung, aus einer inneren Trennwand, die das Vorrichtungsinnere in eine Vorbrennkammer und eine Nachbrennkammer unterteilt und in der eine Durchtrittsöffnung zwischen den beiden Kammern vorgesehen ist, und aus einem Gitterrost am Boden der Vorbrennkammer sowie mit einem Rauchgasabzug, wobei die Trennwand an die Frontwand, die Seitenwände und die Rückwand abgedichtet anschließt und horizontal angeordnet ist und in die Durchtrittsöffnung der Trennwand abgedichtet ein von einem Ringraum, der mit der Frischluft-Einlauföffnung in Verbindung steht, umgebenes Schachtrohr eingesetzt ist, auf dessen oberem Ende der Gitterrost aufgelegt ist, wobei die Brennstoff-Einfüllöffnung und die Frischluft-Einlauföffnung sowie der Rauchgasabzug die einzigen Öffnungen der Vorrichtung sind und der Rauchgasabzug im Bereich der Nachbrennkammer in einer Seitenwand oder der Rückwand vorgesehen ist.

Aus DE 38 33 090-C1 ist eine Brennvorrichtung der eingangs bezeichneten Gattung bekannt. Diese Vorrichtung macht jedoch von zwei Trennwänden Gebrauch, die im Bereich von Durchtrittsöffnungen über ein Schachtrohr miteinander in Verbindung stehen, innerhalb dessen ein verhältnismäßig kompliziert herzustellender Düsenkörper angeordnet ist. Diese bekannte Vorrichtung, die zwar bereits die Nachteile der vorstehend erörterten bekannten Vorrichtung überwindet, ist jedoch in ihrer Gesamtheit wegen der Herstellung insbesondere des Düsenkörpers aus hochhitzefestem Material und dessen konstruktiv aufwendiger Gestaltung sehr teuer, und zwar auch bei Massenherstellung, so daß wegen des hohen Gestehungspreises der bekannten Vorrichtung die grundsätzlich erreichbare umweltfreundliche Verbrennung nicht bzw. nur in geringem Umfang zur Anwendung kommt.

Weiterhin zeigt die FR-A-768 790 eine Brennvorrichtung, bei der zwischen der Vorbrennkammer und Nachbrennkammer ein Gitterrost vorhanden ist, der aus im Abstand nebeneinander angeordneten Rohren gebildet wird, die seitliche Austrittsschlitze für die in die Rohre zugeführte Sekundärluft aufweisen. Diese Rohre sind jedoch lediglich mit an ihren Stirnseiten separat verlaufenden Versorgungsleitungen verbunden, wobei jede Versorgungsleitung separat über eine Einströmöffnung und eine Regelvorrichtung mit Frischluft versorgt werden kann. Ein um die Rohre des Rostes zur Frischluftversorgung umlaufender Ringraum mit nur einer einzigen Einströmöffnung mit Regelvorrichtung ist nicht vorhanden.

Der Erfindung liegt die Aufgabe zugrunde, die eingangs hinsichtlich ihrer Gattung bezeichnete Brennvorrichtung so weiterzubilden, daß es auch weiterhin keiner besonderen Erfahrung bei der Steuerung des Brennverhaltens zur Steuerung der Heizleistung bedarf; und zugleich der Brennwirkungsgrad und das Emissionsverhalten nach Möglichkeit noch weiter verbessert werden, dennoch aber die Neugestaltung eine preiswerte Herstellbarkeit gestatten soll.

Diese Aufgabe wird erfindungsgemäß dadurch gelöst, daß die Trennwand im wesentlichen als Gitterrost ausgebildet ist, daß der Gitterrost aus einem umlaufenden Kanalrohr besteht, dessen Inneres einen mit einer Luftzuführungsöffnung versehenen Ringraum bildet und in das zur Gitterbildung mindestens ein Rohr eingesetzt ist, dessen Inneres mit dem Ringraum in Verbindung steht und das seitlich gerichtete Schlitze aufweist. d.h. daß bei der Verwendung von mehreren Rohren zur Gitterbildung diese zum jeweils zum benachbarten Rohr hin gerichtete Schlitze aufweisen.

Durch die erfindungsgemäße Ausbildung der Trennwand als Gitterrost und dessen Gestaltung aus einem umlaufenden Kanalrohr mit Ringraum, wobei im Zentrum des Kanalrohres mindestens ein mit dem Ringraum in Verbindung stehendes Rohr mit seitlich gerichteten Schlitzen eingesetzt ist, ist die Möglichkeit geschaffen, die für die Nachverbrennung erforderliche Sekundärluft schon unmittelbar dort zuzuführen, wo die aus der Vorbrennkammer stammenden Abgase und Brenngase die Vorbrennkammer verlassen, nämlich unmittelbar beim Durchtritt durch den Gitterrost. Die Brenngase liegen dort wegen des Gitterrohres bzw. der Gitterrohre nicht in einem kompakten Strom vor, weshalb sich ihnen die aus den Rohrschlitzen austretende Sekundärluft in hervoragender Weise beimischen läßt. Die Ausbildung der Trennwand im wesentlichen als Gitterrost und dessen Aufbau aus einem Kanalrohr mit Gitterrohr(en) samt Schlitzen ist eine so einfache Konstruktion, die in der Praxis ohne bedeutsame Kosten realisierbar ist. Im übrigen gewährleistet diese Ausbildung eine Güte des Brennvorgangs, wie sie erstmals mittels der aus der DE 38 33 090-C1 bekannten Vorrichtung bekannt ist. Für die Güte des Brennvorgangs ist im übrigen hier maßgeblich, daß die durch das Kanalrohr hindurch dem bzw. den Gitterrohr(en) zugeführte Sekundärluft von der Wärme in der Nachbrennkammer so erheblich aufgewärmt wird, daß bei ihrer Beimischung zu dem Brenngasstrom der Vorbrennkammer keine merkliche Temperatursenkung eintritt. Insbesondere erfährt die Sekundärluft eine Erwärmung auf über 500°C, weshalb die Brenngase beim Beimischen der Sekundärluft ihre Zündtemperatur nicht verlieren.

Selbstverständlich steht es dem Konstrukteur im Einzelfall frei, das Kanalrohr im Querschnitt und/oder in Draufsicht rechteckig auszubilden, da Öfen in der Regel eine entsprechende Rechteckgestalt besitzen. Dennoch kommt selbstverständlich auch ein runder Querschnitt der Einzelteile wie auch des Ofens selbst in Betracht, in welchem Fall die Frontwand, die Seitenwände und die Rückwand von entsprechend gelegenen Bereichen der dann in Draufsicht runden Umfangswand des Ofens gebildet sind.

Zur besseren und gezielten Verbrennung kann die innere Fläche des Kanalrohres durch ein im Querschnitt nach unten verjüngtes Schachtrohr nach unten verlängert sein. Dabei kann an dessen unteres freies Ende ein zylindrisches oder prismatisches Rohr anschließen und kann schließlich an dessen unteren freien Ende ein einwärts gerichteter Umlaufsteg vorgesehen sein. Diese Weiterbildungsmaßnahmen dienen dazu, die Homogenität des Luft/Brenngasstrom zu verbessern. Dies ist darauf zurückzuführen, daß der Umlaufsteg praktisch eine Staufläche bildet.

Für die Gestaltung des Schachtrohres mit seiner nach unten gerichteten Querschnittsverjüngung empfiehlt sich die Ausbildung des halben Scheitelwinkels im Größenbereich von 20 Grad bis 45 Grad, insbesondere von 25 Grad bis 35 Grad.

Wegen der hohen Temperaturen der Verbrennung in der Nachbrennkammer sollten das Schachtrohr und das zylindrische bzw. prismatische Rohr aus hochhitzefestem Stahlblech hergestellt sein.

Der Brennvorgang in seiner Gesamtheit läuft wie folgt ab. Der Brennstoff wird unter Einwirkung der Primärluft in der Vorbrennkammer teilverbrannt bzw. vergast. Die Verbrennungsrückstände fallen durch den Gitterrost hindurch, gelangen anschließend in das Innere des Schachtrohres und fallen zum Boden der Nachbrennkammer herunter. Soweit diese Brennstoffreste, bzw. kleine Kohlepartikel oder dgl., noch weiter abbrennfähig sind, brennen sie in der Nachbrennkammer ab. Gleichzeitig treten die in der Vorbrennkammer anfallenden Brenngase durch den Gitterrost hindurch, gelangen dabei in das Innere des Schachtrohres und werden beim Durchtritt durch den Gitterrost mit der Sekundärluft vermischt. Zugleich findet unmittelbar nach der Beimischung eine Verbrennung gerichtet in die Nachbrennkammer statt.

Selbstverständlich können die in der Vorbrennkammer benötigte Luft (Primärluft) und die in der Nachbrennkammer benötigte Luft (Sekundärluft) über je eine eigene Frischluft-Einlauföffnung zugeführt werden. Zu bevorzugen ist jedoch die Zuführung über eine gemeinsame Einlauföffnung.

Die Aufteilung der durch eine gemeinsame Frischluft-Einlauföffnung eintretenden Gesamtluft in Primärluft und Sekundärluft kann durch ANordnung der Öffnung in der Tür für die brennstoff-Einfüllöffnung und entsprechende Gestaltung dieser Tür automatisch erfolgen. Für eine richtige Aufteilung bedarf es keines äußeren Eingriffs; maßgeblich ist die höhengerechte Anordnung der Frischluft-Einlauföffnung in der Tür und deren Gestaltung. Das dann an der Tür vorzusehende Steuerelement dient lediglich der Drosselung der Heizleistung durch Beeinflussung in erster Linie der Menge der Primärluft. Für die automatische Aufteilung der Frischluft sollte die Tür eine Kammer aufweisen, also eine auch als "Rucksacktür" zu bezeichnende Tür sein, wobei aus dem oberen bzw. unteren Kammerteil je durch eine Öffnung die Primär- bzw. Sekundärluft austritt.

Durch die Vorsehung lediglich einer einzigen Frischluft-Einlauföffnung mit zugehörigem Steuerelement ist die Bedienbarkeit der erfindungsgemäßen Brennvorrichtung grundsätzlich so einfach wie überhaupt möglich; dies gilt unabhängig davon, ob die Frischluft-Einlauföffnung in der Tür oder anderweitig angeordnet ist.

Ausgiebige Brennversuche zur Bestimmung der optimalen Größenverhältnisse für bestimmte Heizleistungen und insbesondere zur Überprüfung des Emissionsverhaltens und Brennwirkungsgrades haben auch für die neu gestaltete erfindungsgemäße Brennvorrichtung gezeigt, daß der ungünstigste CO-Emissionswert, der während der Anheizphase auftritt, weit unter dem aufgrund gesetzlicher Vorschriften zulässigen durchschnittlichen CO-Maximalwert von 6.000 ppm CO für Öfen mit Festbrennstoffen liegt; die gemessenen ungünstigsten Maximalwerte liegen zwischen 2.000 und 3.000 ppm CO, während der Durchschnittswert bei nur 1.000 bis 1.200 ppm CO liegt. Diese Werte sind nicht nur besser als gesetzlich zulässig, sondern liegen sogar auch weit unter den bisher anderweitig erreichten Werten. Auch der erreichte Brenn-Wirkungsgrad mit knapp unter 90 % und gelegentlich sogar auch deutlich über 90 % ist weit besser als der aufgrund von Vorschriften zulässige Mindestwirkungsgrad von 75 %. Selbstverständlich kann für die Optimierung des Brennverhaltens während der Anheizphase eine übliche Anheizklappe vorgesehen sein, die nur während des Anheizens geöffnet wird. Da diese Klappe im übrigen geschlossen bleibt, stellen die Brennstoff-Einfüllöffnung mit ihrer integrierten Frischluft-Einlauföffnung und der Rauchgasabzug in der Tat die einzigen eigentlichen Öffnungen der Brennvorrichtung dar.

Für eine optimale Aufteilung der Frischluft in Primärluft und Sekundärluft mittels der "Rucksacktür" kann dadurch Sorge getragen werden, daß die Frischluft-Einlauföffnung im unteren oder mittleren Drittel der Höhe der Vorbrennkammer, vorzugsweise im Bereich der unteren 30 % bis 50 % der Höhe derselben, angeordnet ist. Eine solche Bemessung hat sich bei Brennversuchen als optimal erwiesen.

Aus dieser Sicht kommt alternativ auch die Verwendung einer Doppelkammertür in Betracht, deren eine Kammer mit der Vorbrennkammer und deren andere Kammer mit dem Luftschacht in Verbindung steht.

Für die problemlose Einstellung der Brennverhältnisse reicht die Ausbildung des Regelelements als Klappe aus, die zwischen zwei Endstellungen verschwenkbar und nur in diesen arretierbar ist. Dabei ist in der einen Endstellung die Luft-Einlauföffnung vollständig geschlossen, während die andere Stellung die Betriebsstellung ist, die nicht verändert werden muß und optimale Brennverhältnisse gewährleistet. Somit ist durch die entsprechende Gestaltung des Steuerelements der Bediener der Notwendigkeit enthoben, etwa nach zwischenzeitlicher Beobachtung der Brennverhältnisse mehrfach nachregeln zu müssen, um die jeweils richtige Beziehung zwischen den Mengen der Primärluft und der Sekundärluft zu finden.

Für ein gutes Emissionsverhalten ist im übrigen die Anordnung des Rauchgasabzuges innerhalb der Nachbrennkammer auch von Bedeutung; es empfiehlt sich diesbezüglich, daß der Rauchgasabzug höchstens in halber Höhe, vorzugsweise im unteren Drittel der Höhe, der Nachbrennkammer angeordnet ist.

Die Rostrohre des Gitterrostes sollten im Querschnitt rund ausgebildet und in einem Abstand von mindestens 6 mm und höchstens 12 mm voneinander angeordnet sein, wobei die Rostrohre einen Durchmesser von mindestens 15 mm bis höchstens 30 mm aufweisen sollten. Die runde Ausbildung der Rostrohre gewährleistet die Verhinderung von Ablagerungen an den Rostrohren. Wird nur ein einziges Rohr vorgesehen, so ist der eben angegebene Abstand der zwischen diesem Rohr und der benachbarten Wand des Schachtrohres.

Zur Begünstigung der Beimischung der Sekundärluft zu den Brenngasen der Vorbrennkammer bei deren Durchtritt durch den Gitterrost sollten die Luftdurchtritts-Schlitze in den Rostrohren jeweils in Richtung auf die benachbarten Rostrohre bzw. die benachbarte Wand des Schachtrohres und beidseitig der einzelnen Rohre vorgesehen sein. Dabei kommt in Hinblick auf eine gute homogene Beimischung der Sekundärluft in Betracht, daß die Luftdurchtritts-Schlitze einander benachbarter Rostrohre gegeneinander versetzt sind und jeweils aneinander anschließen. Auch sollten die Luftdurchtritts-Schlitze gegen über der horizontalen um etwa 5 Grad bis 25 Grad, insbesondere um 15 Grad, nach unten geneigt sein. Diese geneigte Anordnung der Schlitze gewährleistet die Verhinderung des Eintritts von Feststoffpartikeln aus den vorbei strömenden Brenngasen, so daß die Schlitze nicht verstopft werden.

Im übrigen sollte selbstverständlich zur Entfernung der Asche aus der Nachbrennkammer in deren Bereich in der Frontwand eine abgedichtet verschließbare Öffnung vorgesehen werden.

Nachfolgend wird die Erfindung weiter ins einzelne gehend unter Bezugnahme auf die Zeichnung beschrieben; in dieser zeigen:
- Fig. 1: einen vertikalen Längsschnitt entlang der Tiefenrichtung durch eine ausschließlich beispielhaft zu verstehende Brennvorrichtung entlang der Linie I - I der Fig. 2,
- Fig. 2: eine Vorderansicht auf die Brennvorrichtung,
- Fig. 3: eine Draufsicht auf einen Gitterrost mit einer Vielzahl von Rohren,
- Fig. 4: einen Querschnitt durch ein Gitterrohr,
- Fig. 5:: einen schematischen Vertikal-Teilschnitt durch eine Brennvorrichtung mit mehreren Schachtrohren.

In Umfangsrichtung gesehen besteht die beim dargestellten Ausführungsbeispiel in Draufsicht rechteckige Brennvorrichtung aus einer Frontwand 1, zwei Seitenwänden 2, 3 und einer Rückwand 4 sowie aus einer Bodenwand 5 und einer Deckenwand 6. In der Frontwand 1 ist eine verhältnismäßig sehr große Öffnung 7 vorgesehen, die die Brennstoff-Einfüllöffnung darstellt.

Im Inneren der Vorrichtung ist eine Trennwand 8 vorgesehen, in der zentral eine Durchtrittsöffnung ausgebildet ist. In Hinblick auf die rechteckige Aufrißgestaltung der Vorrichtung in ihrer Gesamtheit ist die Durchtrittsöffnung im Aufriß rechteckig gestaltet, und zwar erstreckt sich bei dem dargestellten Ausführungsbeispiel die Rechteck-Langseite in Breitenrichtung der Vorrichtung, also zwischen den beiden Seitenwänden 2 und 3 derselben, während die Rechteck-Schmalseite parallel zur Zeichnungsebene verläuft.

In die Durchtrittsöffnung ist ein Kanalrohr eingesetzt, wobei die Verbindung desselben mit der Trennwand 8 abgedichtet ist. Das Innere des Kanalrohres stellt einen in sich geschlossenen Ringraum 11 dar. Das Kanalrohr kann aber auch, statt in die Durchtrittsöffnung eingesetzt zu sein, an diese unmittelbar, d. h. abgedichtet anschließen.

Dieser Ringraum 11 setzt sich wegen der beim dargestellten Ausführungsbeispiel höher als die Trennwand 8 gelegenen Frischluft-Einlauföffnung im Bereich der Frontwand 1 in der Form eines Luftschachtes 16 durch die Trennwand 8 hindurch über diese fort, also bis in die oberhalb der Trennwand 8 gelegene Vorbrennkammer 17. Zur Ausbildung des Luftschachtes 16 geht im genannten Bereich von der Oberseite der Trennwand 8 eine Schachtrückwand 18 aus, die seitlich über die Schachtseitenwände 19 mit der Frontwand 1 in Verbindung steht. Der Luftschacht 16 ist nach oben offen und endet höchstens in etwa 20 % der Höhe der Vorbrennkammer 17 im Bereich der Brennstoff-Einfüllöffnung 7.

Läge die Frischluft-Einlauföffnung in der Höhe des Ringraums 11, so wäre der Luftschacht 16 entbehrlich und könnte die Sekundärluft im Ringraum 11 direkt zugeführt werden; allerdings müßte dann eine Zuführungsmöglichkeit für die Primärluft zur Vorbrennkammer 17 vorgesehen werden.

Die Frischlufteinlauföffnung kann im übrigen beliebig angeordnet sein, und zwar in Höhenrichtung als in Umfangsrichtung gesehen. Wichtig ist lediglich die Führung der Luft im Inneren der Brennvorrichtung, nämlich als Primärluft zur Vorbrennkammer und als Sekundärluft zur Nachbrennkammer.

Innenseitig des Kanalrohres ist unter diesem ein Schachtrohr 10 angeordnet, das nach unten im Querschnitt verjüngt und durch ein prismatisches Rohr 13 nach unten verlängert ist, an dessen unterem Innenrand ein Umlaufsteg vorgesehen ist.

Im Zentraum des Kanalrohres sitzt ein Gitterrost.

Der unterhalb der Trennwand 8 gelegene Raum stellt eine Nachbrennkammer 21 dar. Von dem unteren Drittel der Höhe derselben ausgehend führt ein Rauchgasabzug durch die Rückwand 4 hindurch. An der Vorderseite der Nachbrennkammer 21 ist eine Öffnung 23 vorgesehen, die der Entnahme von Asche aus der Nachbrennkammer 21 dient. Diese Öffnung 23 ist durch eine Tür 24 abgedichtet verschlossen.

Die Brennstoff-Einfüllöffnung 7 stellt bei der dargestellten besonderen Ausführungsform der erfindungsgemäßen Brennvorrichtung die Frontwand 1 betreffend auch zugleich die Frischluft-Einlauföffnung dar, die im Bereich einer zugehörigen Tür 9 eine im Querschnitt nur verhältnismäßig sehr kleine Einlauföffnung 25 aufweist. Dieser Öffnung 25 ist eine Klappe 26 zur Verstellung des wirksamen Querschnitts der Öffnung 25 zugeordnet. Die Frischluft-Einlauföffnung 25 ist in etwa 30 % bis 50 % der Höhe der Vorbrennkammer 17 angeordnet, also im wesentlichen dort, wo das obere Ende des Luftschachtes 16 liegt. Die Klappe 26 ist zwischen einer Schließstellung und einer Offnungsstellung, der eigentlichen Betriebsstellung verschwenkbar und nur in diesen arretierbar. Zwischenstellungen der Klappe 26 sind also nicht vorgesehen.

Anstelle des oberen bzw. unteren Teils der klappe 26 für die Primär- bzw. Sekundärluft kann selbstverständlich auch eine seitliche Aufteilung der Öffnung vorgesehen sein, was allerdings eine Klappengestaltung anders als dargestellt erforderlich macht.

Die durch den unteren Teil der Öffnung 25 eintretende Sekundärluft gelangt zunächst in den Luftschacht 16 und von diesem in den Ringraum 11. Letzterer ist durch das Verbrennen von Brennstoff in der Vorbrennkammer 17 gut mit Wärme versorgt, die durch die obere Trennwand 8 hindurchtritt. Um auch nach starker Reduzierung der Primärluftzuführung zur Vorbrennkammer 17 im Ringraum 11 die dort zugeführte Sekundärluft während einer gewissen Zeit noch verhältnismäßig gut erwärmen zu können, ist an der Oberseite der Trennwand 8 eine Schamotteauskleidung 27 vorgesehen, die praktisch einen Langzeit-Wärmespeicher darstellt.

Die in den Ringraum 11 eintretende Sekundärluft wird dort sehr stark erhitzt, beispw. auf eine Temperatur von mehr als 500 °C. Aus dem Ringraum 11 gelangt die so sehr stark erhitzte Sekundärluft über die Rostrohre in das Innere des Schachtrohres 10.

Die solchermaßen geführte Sekundärluft wird bereits im Bereich des Gitterrostes und im Innern des Schachtrohres 10 mit den Abgasen und Brenngasen der Vorbrennlammer 17 vermischt, und zwar ohne daß es dabei zu einer merklichen Temperaturabsenkung kommt, jedenfalls zu keiner solchen unterhalb der Zündtemperatur der Brenngase. Für das Abbrennen der Brenngase steht daher die sehr stark erhitzte Sekundärluft zur Verfügung, so daß das Nachbrennen sehr wirkungsvoll ablaufen kann.

Das Vorbrennen des Brennstoffs in der Vorbrennkammer 17 findet unter der Mitwirkung der durch den oberen Teil der Frischluft-Einlauföffnung 25 eintretenden Primärluft statt. Dieses Vorbrennen stellt weitgehend auch ein Vergasen des Brennstoffs dar, wobei die Brenngase entstehen, die in der Nachbrennkammer 24 abgebrannt werden.

Selbstverständlich können alle Wände der Brennvorrichtung in herkömmlicher und üblicher Weise mit einer Schamotteauskleidung versehen sein. Lediglich das Kanalrohr, das Schachtrohr 10 und das zylindrische bzw. prismatische Rohr 13 sind unausgekleidete Teile, für deren Herstellung besonders hochhitzefestes Stahlblech zu verwenden ist.

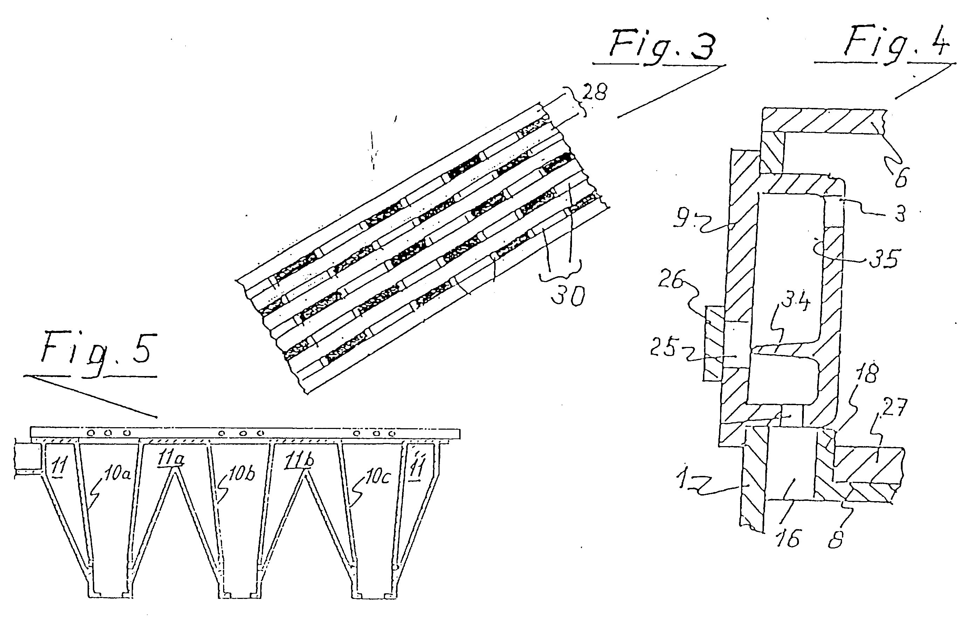

Der Gitterrost, der auch samt Kanalrohr aus feuerfester Keramik hergestellt sein kann, besteht gemäß Fig. 3 aus einer Vielzahl von Rostrohren 28 runden Querschnitts, die in einem Abstand von mindestens 6 mm und höchstens 12 mm voneinander einhalten und einen Durchmesser von mindestens 15 mm bis höchstens 30 mm aufweisen. Die runde Querschnittsgestalt der Rostrohre 28 dient zur Verhinderung der Bildung von Ablagerungen fester Partikel des durch den Gitterrost hindurch streichenden Gasstroms. Die Anzahl der Rostrohre 28 hängt von der Größe der Durchtrittsöffnung in der Trennwand ab.

Die Rostrohre 28 besitzen zu den Nachbarrohren hin gerichtete Schlitze 30, wobei die Schlitze 31 benachbarter Rohre 28 gegeneinander versetzt sind und praktisch aneinander anschließen.

Die in Fig. 2 nur verhältnismäßig schematisch dargestellte Tür 9 kann als Doppelkammertür gemäß Fig. 4 ausgebildet sein. In dieser Tür sind zwei Kammern mittels einer Trennwand 34 voneinander getrennt ausgebildet. Die Trennwand 30 geht von der inneren Rückwandfläche 35 der Tür 9 aus und erstreckt sich bis in den Bereich der Frischluft-Einlauföffnung 25 in der Vorderwand der Tür 9. Die beiden Kammern stehen über je eine Öffnung im rückwärtigen Türbereich mit der Vorbrennkammer 17 bzw. über den Luftschacht 16 mit dem Ringraum 11 in Verbindung. Die Aufteilung der durch die Öffnung eintretenden Primär- und Sekundärluft erfolgt mittels der Trennwand 34.

Die Tür 9 kann aber auch ohne Trennwand ausgebildet sein, wobei dann die Primär- und die Sekundärluftabteilung praktisch automatisch durch die Anordnung der Öffnungen in entsprechender Höhe im rückwärtigen Bereich der als _{"}Rucksacktür" zu bezeichnenden Tür 9 gewährleistet ist.

Es ist übrigens auch möglich, den Gitterrost gänzlich ohne Gitterrohre auszubilden, und zwar unter der Voraussetzung daß die einander gegenüberliegenden Wände des Schachtrohres dicht genug beieinander liegen, nämlich unter Einhaltung des für die Gitterrohre angegebenen Maximalabstandes, und daß in diesen Wänden Schlitze vorgesehen sind, wie dies für die Gitterrohre beschrieben ist. In diesem Fall bilden dann also die genannten Wände des Schachtrohres zugleich und allein den Gitterrost.

Die erfindungsgemäße Brennvorrichtung kann ohne weiteres sowohl ein Einsatzofen sein, um den ein Ofensetzer unter Belassung der notwendigen Luftführungsräume den Kachelteil eines Kachelofens herumbaut, als auch ein Grundofen, gleichgültig ob fabrikmäßig ganz oder teilweise vorfabriziert oder von einem Ofensetzer an Ort und Stelle aus Einzelteilen errichtet, als auch ferner ein Heizkessel, in oder um den herum dann allerdings noch die notwendigen Wasser-bzw. Luftführungen mit zugehörigen Wärmetauschereinrichtungen einzubauen wären, die jedoch das erfindungsgemäße Konzept des eigentlichen Brennteils nicht tangiert werden.

Anstelle der dargestellten und ausführlich beschriebenen Anordnung der Vorbrennkammer oberhalb der Nachbrennkammer können die beiden Brennkammern auch umgekehrt, d. h. die Nachbrennkammer oberhalb der Vorbrennkammer, oder in einer gemeinsamen Ebene angeordnet sein. Diese Varianten lassen ebenso gute Brennverhältnisse zu, wobei die Variante mit der Nachbrennkammer oberhalb der Vorbrennkammer für den Bau offener Kamine geeignet ist.

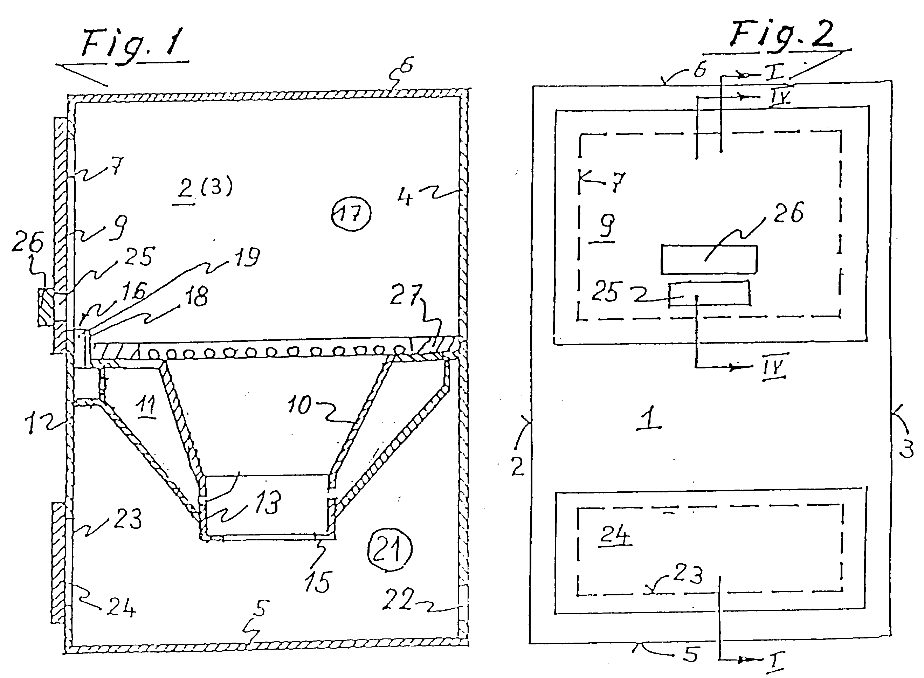

Anstelle eines einzigen Schachtrohres 10, wie dies aus Fig. 1 ersichtlich ist, können mehrere solcher Schachtrohre 10a, 10b, 10c nebeneinander liegend in der Durchtrittsöffnung der Trennwand 8 eingesetzt sein. In diesem Fall ist es zweckmäßig, alle Schachtrohre identisch auszubilden und zwischen jeweils zwei benachbarten Schachtrohren einen Kanalraum vorzusehen, der einander gegenüberliegende Bereiche des Ringraums 11 miteinander verbindet, und damit praktisch, jedenfalls strömungstechnisch, Bestandteil des Ringraums 11 bildet. Diese Ausbildung gewährleistet nochmals verbesserte Brennverhältnisse, weil die quer zu den Rostrohren 28 liegenden Wände der Schachtrohre in einem verhältnismäßig kleinen Abstand zueinander angeordnet sind, was die Flammen- und Gasführung begünstigt.

Selbstverständlich können die drei nebeneinander liegenden Schachtrohre 10a, 10b, 10c der Fig. 5 entgegen der dortigen Darstellung in der um 90° verdrehten Richtung nebeneinander liegen: in diesem Fall ergibt sich eine Darstellung gemäß Fig. 5, bei der lediglich die Stäbe des Gitterrostes statt parallel zur und in der Zeichnungsebene liegend quer zur Zeichnungsebene liegend quer zur Zeichnungsebene verlaufen.

## Patentansprüche

1. Brennvorrichtung zum Verbrennen von Holz oder Kohle, bestehend aus:
- einer Frontwand (1) mit einer Brennstoff-Einfüllöffnung (7),
- aus zwei Seitenwänden (2, 3),
- aus einer Rückwand (4),
- aus einer Bodenwand (5) und
- aus einer Deckenwand (6),
- aus einer Tür (9) für die Brennstoff-Einfüllöffnung (7),
- aus einem Steuerelement zur Steuerung des wirksamen Querschnitts einer Frischluft-Einlauföffnung (25),
- aus einer inneren Trennwand (8), die das Vorrichtungsinnere in eine Vorbrennkammer (17) und eine Nachbrennkammer (21) unterteilt und in der eine Durchtrittsöffnung zwischen den beiden Kammern vorgesehen ist,
- und aus einem Gitterrost (18) am Boden der Vorbrennkammer (17) sowie
- einem Rauchgasabzug (22),
- wobei die Trennwand (8) an die Frontwand (1), die Seitenwände (2, 3) und die Rückwand (4) abgedichtet anschließt und horizontal angeordnet ist,
- in die Durchtrittsöffnung der Trennwand (8) abgedichtet von einem Ringraum (11), der mit der Frischluft-Einlauföffnung (25) in Verbindung steht, umgebendes Schachtrohr (10) eingesetzt ist, an dessem oberen Ende der Gitterrost angeordnet ist,
- wobei die Brennstoff-Einfüllöffnung und die Frischluft-Einfüllöffnung (25) und der Rauchgasabzug (22) die einzigen Öffnungen der Vorrichtung sind und der Rauchgasabzug (22) im Bereich der Nachbrennkammer (21) in einer Seitenwand oder der Rückwand vorgesehen ist,
**dadurch gekennzeichnet, daß**
- die Trennwand (8) im wesentlichen als Gitterrost mit einem umlaufenden Kanalrohr (10) besteht, dessen Inneres einen einheitlichen mit einer Luftzuführung versehenen Ringraum (11) bildet und
- in das zur Gitterbildung mindestens ein Rohr (28) eingesetzt ist, dessen Inneres mit dem Ringraum (11) in Verbindung steht und das seitlich, ggf. zum jeweils benachbarten Rohr (28) hin, gerichtete Schlitze (30) aufweist.

2. Brennvorrichtung nach Anspruch 1,
**dadurch gekennzeichnet, daß**
das Kanalrohr (10) im Querschnitt und/oder in Draufsicht rechteckig ausgebildet ist.

3. Brennvorrichtung nach Anspruch 1,
**dadurch gekennzeichnet, daß**
die die Durchtrittsöffnung zwischen beiden Brennkammern begrenzende innere Fläche des Schachtrohres (10) durch ein im Querschnitt nach unten verjüngtes Rohr (13) verlängert ist.

4. Brennvorrichtung nach Anspruch 3,
**dadurch gekennzeichnet, daß**
an das untere freie Ende des Rohres (13) ein zylindrisch oder prismatisch ausgebildet ist.

5. Brennvorrichtung nach Anspruch 4,
**dadurch gekennzeichnet, daß**
am unteren freien Ende des zylindrischen oder prismatischen Rohres (13) ein einwärts gerichteter Umlaufsteg (15) vorgesehen ist.

6. Brennvorrichtung nach Anspruch 5,
**dadurch gekennzeichnet, daß**
der halbe Scheitelwinkel (α) des nach unten im Querschnitt verjüngten Rohres (13) kleiner als 45 Grad und größer als 20 Grad ist.

7. Brennvorrichtung nach Anspruch 6,
**dadurch gekennzeichnet, daß**
der halbe Scheitelwinkel (α) des Rohres (13) im Bereich zwischen 25 und 35 Grad liegt.

8. Brennvorrichtung nach mindestens einem der Ansprüche 4 bis 8,
**dadurch gekennzeichnet, daß**
das Schachtrohr (10) und das zylindrische oder prismatische Rohr (13) aus hoch-hitzefestem Stahlblech bestehen.

9. Brennvorrichtung nach mindestens einem der vorausgehenden Ansprüche,
**dadurch gekennzeichnet, daß**
die Frischluft-Einlauföffnung (25) in der Tür (9) im unteren oder mittleren Drittel der Höhe der Vorbrennkammer (17), vorzugsweise im Bereich der unteren 30 % bis 50 % der Höhe derselben, angeordnet sind.

10. Brennvorrichtung nach mindestens einem der vorausgehenden Ansprüche,
**dadurch gekennzeichnet, daß**
die Tür (9) für die Brennstoff-Einfüllöffnung zugleich die Frontwand der Vorrichtung bildet.

11. Brennvorrichtung nach mindestens einem der vorausgehenden Ansprüche,
**dadurch gekennzeichnet, daß**
das Steuerelement als Klappe (26) ausgebildet ist, die zwischen zwei Endstellungen verschwenkbar und nur in diesen arretierbar ist, wobei in der einen Endstellung die Frischluft-Einlauföffnung (25) vollständig verschlossen ist.

12. Brennvorrichtung nach mindestens einem der vorausgehenden Ansprüche,
**dadurch gekennzeichnet, daß**
die Breite und die Tiefe der Vorbrennkammer (17) und/oder der Nachbrennkammer (21) etwa gleich groß bemessen sind.

13. Brennvorrichtung nach mindestens einem der vorausgehenden Ansprüche,
**dadurch gekennzeichnet, daß**
der Rauchgasabzug (22) höchstens in halber Höhe unterhalb des freien Endes des zylindrischen bzw. prismatischen Rohres (13) angeordnet ist.

14. Brennvorrichtung nach mindestens einem der vorausgehenden Ansprüche,
**dadurch gekennzeichnet, daß**
in der Frontwand (1) eine abgedichtet verschließbare Öffnung (23) als Zugang zur Nachbrennkammer (21) vorgesehen ist.

15. Brennvorrichtung nach mindestens einem der vorausgehenden Ansprüche,
**dadurch gekennzeichnet, daß**
die Tür (9) als Doppelhammertür mit zwei Kammern ausgebildet ist, die über je eine Öffnung im rückwärtigen Bereich der Tür (9) mit der Vorbrennkammer (17) in Verbindung stehen.

16. Brennvorrichtung nach Anspruch 15,
**dadurch gekennzeichnet, daß**
- sich der Ringraum (11) in Form eines Luftschachtes (16) durch die Trennwand (8) hindurch über diese hinaus nach oben bis in die Vorbrennkammer (17) fortsetzt und
- der Luftschacht (16) nach oben offen ist und im Bereich der Frischluft-Einlauföffnung (25) endet.

17. Brennvorrichtung nach mindestens einem der vorausgehenden Ansprüche,
**dadurch gekennzeichnet, daß**
die Rohre (28) des Gitterrostes im Querschnitt rund ausgebildet und in einem Abstand von mindestens 6 mm und höchstens 12 mm voneinander angeordnet sind, wobei die Rohre (28) einen Durchmesser von mindestens 15 mm bis höchstens 30 mm aufweisen.

18. Brennvorrichtung nach mindestens einem der vorausgehenden Ansprüche,
**dadurch gekennzeichnet, daß**
die Schlitze (30) einander benachbarter Rohre (28) gegeneinander versetzt sind und jeweils aneinander anschließen.

19. Brennvorrichtung nach Anspruch 18,
**dadurch gekennzeichnet, daß**
die Schlitze (30) gegenüber der Horizontalen um etwa 5 Grad bis 25 Grad, insbesondere um 15 Grad, nach unten geneigt sind.

20. Brennvorrichtung nach mindestens einem der vorausgehenden Ansprüche,
**dadurch gekennzeichnet, daß**
in die Durchtrittsöffnung der Trennwand (8) mehrere gemeinsam von dem Ringraum (11) umgebene Schachtrohre (10a, b, c) nebeneinander liegend eingesetzt sind.

21. Brennvorrichtung nach Anspruch 20,
**dadurch gekennzeichnet, daß**
alle Schachtrohre (10a, b, c) identisch sind.

22. Brennvorrichtung nach Anspruch 20 oder 21,
**dadurch gekennzeichnet, daß**
zwischen jeweils zwei einander benachbarten Schachtrohren (10a, b; 10b, c) ein einander gegenüberliegende Bereiche des Ringraums (11) miteinander verbindender Kanalraum vorgesehen ist.

## Claims

1. A combustion apparatus for burning wood or coal comprising:
- a front wall (1) with a fuel filling opening (7),
- two side walls (2, 3),
- a rear wall (4),
- a bottom wall (5) and
- a top wall (6),
- a door (9) for the fuel filling opening (7),
- a control element for controlling the effective cross-section of a fresh air intake opening (25),
- an inner partition wall (8) which subdivides the interior of the apparatus into a pre-combustion chamber (17) and a post-combustion chamber (21) and in which a through opening is provided between the two chambers,
- a bar grate (18) at the bottom of the pre-combustion chamber (17), and
- a flue gas outlet (22),
- wherein the partition wall (8) is sealingly joined to the front wall (1), the side walls (2, 3) and the rear wall (4) and is arranged horizontally,
- fitted into the through opening in the partition wall (8) in sealed relationship is a shaft tube (10) which is surrounded by an annular space (11) communicating with the fresh air intake opening (25) and at the upper end of which the bar grate is arranged,
- wherein the fuel filling opening and the fresh air intake opening (25) and the flue gas outlet (22) are the only openings of the apparatus and the flue gas outlet (22) is provided in the region of the post-combustion chamber (21) in a side wall or the rear wall,
- characterised in that
- the partition wall (8) is substantially in the form of the bar grate with a peripherally extending passage tube (10) whose interior forms a unitary annular space (11) provided with an air supply means, and
- into which is fitted at least one tube (28) for forming the grate, the interior of the tube communicating with the annular space (11) and the tube having slots (30) directed laterally, possibly towards the respectively adjacent tube (28).

2. A combustion apparatus according to claim 1 characterised in that the passage tube (10) is of a rectangular configuration in cross-section and/or in plan view.

3. A combustion apparatus according to claim 1 characterised in that the internal surface of the shaft tube (10), which defines the through opening between the two combustion chambers, is prolonged by a tube (13) which decreases downwardly in cross-section.

4. A combustion apparatus according to claim 3 characterised in that the lower free end of the tube (13) is of a cylindrical or prismatic configuration.

5. A combustion apparatus according to claim 4 characterised in that an inwardly directed peripherally extending web (15) is provided at the lower free end of the cylindrical or prismatic tube (13).

6. A combustion apparatus according to claim 5 characterised in that half the apex angle (α) of the tube (13) which decreases downwardly in cross-section is smaller than 45 degrees and larger than 20 degrees.

7. A combustion apparatus according to claim 6 characterised in that half the apex angle (α) of the tube (13) is in the range of between 25 and 35 degrees.

8. A combustion apparatus according to at least one of claims 4 to 8 characterised in that the shaft tube (10) and the cylindrical or prismatic tube (13) comprise highly heat-resistant steel plate.

9. A combustion apparatus according to at least one of the preceding claims characterised in that the fresh air intake opening (25) in the door (9) is arranged in the lower or middle third of the height of the pre-combustion chamber (17), preferably in the region of the lower 30% to 50% of the height thereof.

10. A combustion apparatus according to at least one of the preceding claims characterised in that the door (9) for the fuel filling opening at the same time forms the front wall of the apparatus.

11. A combustion apparatus according to at least one of the preceding claims characterised in that the control element is in the form of a flap (26) which is pivotable between two limit positions and which can only be arrested in such positions, wherein the fresh air intake opening (25) is completely closed in the one limit position.

12. A combustion apparatus according to at least one of the preceding claims characterised in that the width and the depth of the pre-combustion chamber (17) and/or the post-combustion chamber (21) are approximately equal.

13. A combustion apparatus according to at least one of the preceding claims characterised in that the flue gas outlet (22) is arranged at the highest at half the height below the free end of the cylindrical or prismatic tube (13).

14. A combustion apparatus according to at least one of the preceding claims characterised in that a sealingly closable opening (23) is provided in the front wall (1) as access to the post-combustion chamber (21).

15. A combustion apparatus according to at least one of the preceding claims characterised in that the door (9) is in the form of a double-chamber door with two chambers which communicate by way of respective openings in the rearward region of the door (9) with the precombustion chamber (17).

16. A combustion apparatus according to claim 15 characterised in that
- the annular space (11) is extended in the form of an air shaft (16) through the partition wall (8) beyond same upwardly into the pre-combustion chamber (17), and
- the air shaft (16) is open upwardly and ends in the region of the fresh air intake opening (25).

17. A combustion apparatus according to at least one of the preceding claims characterised in that the tubes (28) of the bar grate are of a round cross-sectional configuration and are disposed at a spacing from each other of at least 6 mm and at most 12 mm, the tubes (28) being of a diameter of at least 15 mm to at most 30 mm.

18. A combustion apparatus according to at least one of the preceding claims characterised in that the slots (30) of mutually adjacent tubes (28) are displaced relative to each other and respectively adjoin each other.

19. A combustion apparatus according to claim 18 characterised in that the slots (30) are inclined downwardly relative to the horizontal through about 5 degrees to 25 degrees, in particular 15 degrees.

20. A combustion apparatus according to at least one of the preceding claims characterised in that a plurality of shaft tubes (10a, b, c) jointly surrounded by the annular space (11) are fitted in side-by-side relationship into the through opening of the partition wall (8).

21. A combustion apparatus according to claim 20 characterised in that all shaft tubes (10a, b, c) are identical.

22. A combustion apparatus according to claim 20 or claim 21 characterised in that provided between each two mutually adjacent shaft tubes (10a, b, c; 10b, c) is a passage space which interconnects mutually oppositely disposed regions of the annular space (11).

## Revendications

1. Dispositif de combustion pour bois ou charbon, se composant de:
- une paroi frontale (1) avec une ouverture (7) de chargement de combustible,
- deux parois latérales (2, 3),
- une paroi arrière (4),
- une paroi de fond (5), et
- une paroi de plafond (6),
- une porte (9) pour l'ouverture (7) de chargement de combustible,
- un élément de commande pour commander la section effective d'une ouverture (25) d'entrée d'air frais,
- une cloison interne (8), qui divise l'intérieur du dispositif en une chambre de précombustion (17) et une chambre de postcombustion (21) et dans laquelle il est prévu une ouverture de passage entre les deux chambres,
- et une grille (18) au fond de la chambre de précombustion (17) ainsi que de
- un conduit de fumées (22),
- dans lequel la cloison (8) se raccorde de façon étanche à la paroi frontale (1), aux parois latérales (2, 3) et à la paroi arrière (4) et est disposée horizontalement,
- dans lequel un puits tubulaire (10) est disposé de façon étanche dans l'ouverture de passage de la cloison (8), en l'entourant au moyen d'une chambre annulaire (11), qui est en communication avec l'ouverture (25) d'entrée d'air frais, à l'extrémité supérieure duquel est disposée la grille,
- dans lequel l'ouverture de chargement de combustible et l'ouverture (25) d'entrée d'air frais et le conduit de fumées (22) sont les seules ouvertures du dispositif et le conduit de fumées (22) est prévu dans une paroi latérale ou dans la paroi arrière, dans la région de la chambre de postcombustion (21),
caractérisé en ce que
- la cloison (8) est constituée par la grille avec un canal tubulaire périphérique (10), dont l'intérieur forme une chambre annulaire unitaire (11) pourvue d'une arrivée d'air, et en ce que
- on utilise pour former la grille au moins un tube (28), dont l'intérieur est en communication avec la chambre annulaire (11) et qui présente des fentes (30) dirigées latéralement, éventuellement vers le tube (28) voisin.

2. Dispositif de combustion suivant la revendication 1, caractérisé en ce que le canal tubulaire (10) est de forme rectangulaire en section et/ou en vue en plan.

3. Dispositif de combustion suivant la revendication 1, caractérisé en ce que la surface interne du puits tubulaire (10) limitant l'ouverture de passage entre les deux chambres de combustion est prolongée par un tube (13) diminuant de section de haut en bas.

4. Dispositif de combustion suivant la revendication 3, caractérisé en ce qu'une partie cylindrique ou prismatique est formée à l'extrémité inférieure libre du tube (13).

5. Dispositif de combustion suivant la revendication 4, caractérisé en ce qu'il est prévu un rebord périphérique (15) dirigé vers l'intérieur à l'extrémité inférieure libre du tube cylindrique ou prismatique (13).

6. Dispositif de combustion suivant la revendication 5, caractérisé en ce que le demi-angle au sommet (α) du tube (13) diminuant de section de haut en bas, est plus petit que 45 degrés et plus grand que 20 degrés.

7. Dispositif de combustion suivant la revendication 6, caractérisé en ce que le demi-angle au sommet (α) du tube (13) est compris dans la gamme entre 25 et 35 degrés.

8. Dispositif de combustion suivant au moins l'une des revendications 4 à 8, caractérisé en ce que le puits tubulaire (10) et le tube cylindrique ou prismatique (13) se composent d'une tôle d'acier résistant à haute température.

9. Dispositif de combustion suivant au moins l'une des revendications précédentes, caractérisé en ce que l'ouverture d'entrée d'air frais (25) dans la porte (9), est disposée dans le tiers inférieur ou central de la hauteur de la chambre de précombustion (17), de préférence dans la région des 30 % à 50 % inférieurs de la hauteur de celle-ci.

10. Dispositif de combustion suivant au moins l'une des revendications précédentes, caractérisé en ce que la porte (9) pour l'ouverture de chargement de combustible forme également la paroi frontale du dispositif.

11. Dispositif de combustion suivant au moins l'une des revendications précédentes, caractérisé en ce que l'élément de commande est constitué par un clapet (26), qui peut pivoter entre deux positions extrêmes et ne peut être bloqué que dans celles-ci, l'ouverture d'entrée d'air frais (25) étant entièrement fermée dans la première position extrême.

12. Dispositif de combustion suivant au moins l'une des revendications précédentes, caractérisé en ce que la largeur et la profondeur de la chambre de précombustion (17) et/ou de la chambre de postcombustion (21) ont à peu près la même grandeur.

13. Dispositif de combustion suivant au moins l'une des revendications précédentes, caractérisé en ce que le conduit de fumées (22) est disposé au maximum à mi-hauteur en dessous de l'extrémité libre du tube cylindrique respectivement prismatique (13).

14. Dispositif suivant au moins l'une des revendications précédentes, caractérisé en ce qu'il est prévu dans la paroi frontale (1) une ouverture pouvant se fermer hermétiquement (23), pour l'accès à la chambre de postcombustion (21).

15. Dispositif de combustion suivant au moins l'une des revendications précédentes, caractérisé en ce que la porte (9) est constituée par une porte à chambre double, avec deux chambres qui sont chacune en communication avec la chambre de précombustion (17) par une ouverture dans la région arrière de la porte (9).

16. Dispositif de combustion suivant la revendication 15, caractérisé en ce que
- la chambre annulaire (11) se prolonge sous la forme d'un puits à air (16) à travers la cloison (8) et au-delà de celle-ci vers le haut jusque dans la chambre de précombustion (17), et
- le puits à air (16) est ouvert vers le haut et se termine dans la région de l'ouverture d'entrée d'air frais (25).

17. Dispositif de combustion suivant au moins l'une des revendications précédentes, caractérisé en ce que les tubes (28) de la grille ont une section de forme ronde et sont disposés à une distance d'au moins 6 mm et au maximum de 12 mm l'un de l'autre, les tubes (28) présentant un diamètre d'au moins 15 mm à maximum 30 mm.

18. Dispositif de combustion suivant au moins l'une des revendications précédentes, caractérisé en ce que les fentes (30) de tubes (28) voisins l'un de l'autre sont décalées l'une par rapport à l'autre et se raccordent l'une à l'autre.

19. Dispositif de combustion suivant la revendication 18, caractérisé en ce que les fentes (30) sont inclinées vers le bas, par rapport à l'horizontale, d'environ 5 degrés à 25 degrés, en particulier de 15 degrés.

20. Dispositif de combustion suivant au moins l'une des revendications précédentes, caractérisé en ce que plusieurs puits tubulaires (10a, b, c) entourés ensemble par la chambre annulaire (11) sont placés l'un à côté de l'autre dans l'ouverture de passage à travers la cloison (8).

21. Dispositif de combustion suivant la revendication 20, caractérisé en ce que tous les puits tubulaires (10a, b, c) sont identiques.

22. Dispositif de combustion suivant la revendication 20 ou 21, caractérisé en ce qu'il est chaque fois prévu, entre deux puits tubulaires (10a, b, c) voisins l'un de l'autre, un canal reliant l'une à l'autre des régions de la chambre annulaire (11) disposées l'une en face de l'autre.
